# EUROPÄISCHE PATENTSCHRIFT

(11) **EP 0 902 751 B1**
(45) Veröffentlichungstag und Bekanntmachung des Hinweises auf die Patenterteilung: **27.10.1999**
(21) Anmeldenummer: 96922808.9
(22) Anmeldetag: 14.06.1996
(51) Int. Cl.: B62D 5/06, F16K 24/04, F15B 21/04

(54) **VERFAHREN ZUR ENTLÜFTUNG EINES HYDRAULISCHEN SERVOLENKSYSTEMS**
PROCESS FOR VENTING A HYDRAULIC ASSISTED STEERING SYSTEM
PROCEDE D'EVACUATION DE L'AIR DANS UN SYSTEME DE DIRECTION HYDRAULIQUE ASSISTEE

(43) Veröffentlichungstag der Anmeldung: 24.03.1999
(73) Patentinhaber: TRW Fahrwerksysteme GmbH & Co. KG, 40547 Düsseldorf (DE); Marzocchi Pompe S.r.l., 40033 Casalecchio di Reno (IT)
(72) Erfinder: WEHAGE, Oliver, 49205 Hasbergen (DE)
(74) Vertreter: Stenger, Watzke & Ring Patentanwälte
(86) Internationale Anmeldenummer: EP9602571
(87) Internationale Veröffentlichungsnummer: WO9747510

(56) Entgegenhaltungen:
- DE-A- 1 901 776
- DE-A- 3 538 670
- DE-A- 4 120 665

## Beschreibung

Die vorliegende Erfindung betrifft ein Hydraulik-Servolenksystem sowie ein Verfahren zu dessen Entlüftung mit Ölentspannungsvolumina.

Verschiedenartige Vorrichtungen zum Be- und Entlüften von flüssigkeitsbeinhaltenden Behältern sowie insbesondere zum Entgasen von Hydraulikanlagen sind aus dem Stand der Technik bekannt. So offenbart beispielsweise die DE 35 38 670 eine ventilgesteuerte Be- und Entlüftung eines Kfz-Kühlers. Aus der DE 19 01 776 ist eine Vorrichtung zum selbsttätigen Entlüften von Hydraulikanlagen unter Verwendung einer federbelasteten Kolben/Zylinderanordnung bekannt. Die DE 41 20 665 offenbart eine elektromotorisch angetriebene Hydraulikpumpe, die sich durch eine kompakte und montagefreundliche Bauweise auszeichnet. Die DE 40 40 003 offenbart eine Servolenkung für Fahrzeuge, wobei nur am Rande Ausgleichsbehälter mit Entlüftung beschrieben sind, die sogenannte Luftabscheiderelemente sind, zu denen direkte Hydraulikleitungen geführt sind. Die DE 24 06 565 betrifft eine Hilfskraftlenkung mit einer Entlüftung, die in Form einer federbelasteten Kugel ausgebildet ist. Schließlich offenbart die DE 43 26 580 eine Vorrichtung zum Entgasen eines hydraulischen Systems, welches ein zusätzliches Bauteil in Form eines trommelförmigen Separators im Bereich des Vorratsbehälters vorschlägt.

Ebenfalls sind im Stand der Technik Servo-Lenksysteme der gattungsgemäßen Art bekannt, bei welchen von einer Servopumpe ein Druckmedium, meist Hydrauliköl, über ein Servolenkventil in die Kammern eines hydraulischen Lenkgetriebes geführt wird. Einerseits ist es bekannt, daß in Hydrauliksystemen sogenannte Luftansammlungen auftreten, welche zu ungewünschten und zum Teil unangenehmen Steuerergebnissen führen können. Andererseits ist es bekannt, daß in Hydrauliksystemen sogenannte Ölentspannungsvolumina gebildet werden, beispielsweise wenn Resonatoren eingesetzt werden. Die Luft kann dabei auf unterschiedliche Weise entstehen, beispielsweise durch Leckage, durch Ausscheiden aus dem Druckmedium und dergleichen. Insbesondere wenn die Ölentspannungsvolumina, beispielsweise der Resonator, eine Kuppel aufweisen, in welcher sich Luft ansammeln kann, weil die Kuppel in Einbaulage nach oben weist, wird sich in der Kuppel mit der Zeit entsprechend viel Luft ansammeln und zu starken Störungen infolge Verschäumung führen und einer daraus folgenden Verschleißerhöhung der Pumpe.

Es besteht somit ein Bedarf daran, Maßnahmen zur Reduzierung der eingeschlossenen Luftmengen zu ergreifen.

Davon ausgehend liegt der vorliegenden Erfindung die **Aufgabe** zugrunde, ein Verfahren zur Reduzierung von Lufteinschlüssen anzugeben. Darüber hinaus soll mit der Erfindung ein hydraulisches Servolenksystem angegeben werden, welches bei reduzierten Luftanteilen die Nachteile, die durch Lufteinschlüsse erzeugt werden, nicht aufweist.

Zur technischen **Lösung** dieser Aufgabe wird mit der Erfindung vorgeschlagen ein Hydraulik-Servolenksystem mit wenigstens einem Ölentspannungsvolumen in Form eines an einer Hydraulikpumpe angeordneten Resonators, welcher im in Einbaulage oberen Bereich eine Verbindung zu einem Tankvolumen aufweist, die durch ein Ventil hergestellt ist, welches direkt in den Tank ragt, und welches gleichzeitig als Entlüftungs- und als Nachsaugventil eingesetzt ist.

Bei dieser erfindungsgemäßen Lösung besteht nunmehr die Möglichkeit, die Luft, die sich innerhalb der Kuppel gesammelt hat, in ein offenes System abzuführen. Das offene System wird dabei durch ein Tankvolumen realisiert. Andere Realisierungen sind denkbar und liegen im Rahmen der Erfindung. Dabei ist vorgesehen, daß die Verbindung der beiden Volumina in vorteilhafter Weise von Betriebsparametern abhängt. Ein geeigneter Betriebsparameter ist dabei der Hydraulikdruck.

Somit wird also bei einem gegebenen Hydraulikdruck eine Verbindung erzeugt, so daß die in einem Entspannungsvolumen gesammelte Luft in ein offenes System abgeführt werden kann. Hierzu wird gemäß einem vorteilhaften Vorschlag der Erfindung eine Verbindungsleitung verwendet. In besonders vorteilhafter Weise wird die Verbindungsleitung durch ein Ventil realisiert oder weist ein solches auf.

Mit der Erfindung wird ein einfaches und mit geringem wirtschaftlichen Aufwand zu realisierendes Verfahren bereitgestellt, mit welchem Lufteinschlüsse weitestgehend vermieden werden können.

Wird bei einem hydraulischen Servolenksystem das erfindungsgemäße Verfahren angewandt, ergibt sich ein neuartiges Servolenksystem mit einem Ölentspannungsvolumen, welches mit seinem in Einbaulage oberen Bereich eine Verbindung zu einem offenen System, vorzugsweise einem Tankvolumen aufweist.

Mit besonderen Vorteil läßt sich die Erfindung bei einem hydraulischen Servolenksystem anwenden, in welches ein Resonator integriert ist.

Besondere Vorteile ergeben sich bei Lenksystemen, bei welchen direkt an der Hydraulikpumpe ein Resonator angeordnet ist. Der Resonator ist ein Volumenelement, welches eine Vielzahl von Kammern auf weist, wobei sich die Druckpulsation des Hydrauliköls im Resonator vermindert. Dabei ist es bekannt, daß direkt in einem oberen Bereich der Hydraulikpumpe der Resonator angeordnet ist. Ein Tank, in der Regel ein Kunststoff-Teil, umgibt dabei sowohl einen Teil der Pumpe als auch den Resonator.

In besonders vorteilhafter Weise ist in dem oberen Bereich des Resonator bzw. eines Entspannungsvolumens ein Ventil angeordnet. Dieses Ventil öffnet gemäß einem vorteilhaften Vorschlag der Erfindung druckabhängig.

Dieses druckabhängig öffnende/schließende Ventil ragt gemäß einem vorteilhaften Vorschlag der Erfindung direkt in den Tank. Sammelt sich somit innerhalb des Resonators mit der Zeit Luft, so wird diese in Abhängigkeit vom Hydraulikdruck regelmäßig in ein offenes System, das heißt den Tank abgeführt.

Gemäß einem besonders vorteilhaften Vorschlag der Erfindung kann dabei vorgesehen sein, daß das zum Auslassen angesammelter Luft vorgesehene neue und erfindungsgemäße Ventil ein bisher an einer Hydraulikpumpe vorgesehenes Ventil mit ursprünglich anderer Funktion ersetzt.

Die Luft kann sich in einem Hydrauliksystem auf unterschiedliche Arten sammeln. Zunächst kann dies beim Befüllen einer Pumpe oder beim Nachfüllen des Systems während des Betriebs erfolgen. Auch ist es bekannt, daß beispielsweise durch Kavitation, Auslösen durch chemische Zersetzung, Leckage und dergleichen Luft in einem Hydrauliksystem entstehen kann. Die Luft wird durch den regulären Ölvolumenstrom nicht aus dem System gefördert. Sie sammelt sich in oberen Volumenbereichen an, beispielsweise in einem Resonatordeckel. Dies besonders dann, wenn der Resonatordeckel kuppelartig ausgestaltet ist. Die im System verbleibende Luft verschäumt das geförderte Öl. Dies verschlechtert das Geräuschverhalten und kann zum Abreißen des Schmierfilms in der Pumpe führen und somit die Lebensdauer verringern.

Bei der erfindungsgemäßen Verfahrensweise gewährleistet beispielsweise ein Entlüftungsventil, welches bei geringen Drücken, zum Beispiel p = 2 bar, geöffnet ist, einen schwachen Leckagestrom zurück in ein offenes System, beispielsweise einen Tank. Bei größeren Drücken ist das Ventil geschlossen und gewährleistet damit den normalen Betrieb von Pumpe und Resonator.

Hieraus ergeben sich eine Reihe von Vorteilen. Einerseits wird das System im Stand-By-Modus des Motor-Pumpen-Aggregats ständig entlüftet. Zum anderen verringert der geringere Volumenstrom durch das Lenkgetriebe den Systemdruck und damit den Energieverbrauch im Stand-By-Betrieb. Bei nur 0,5 1/min Leckage ergeben sich Einsparungen von ca. 5 bis 7%. Schließlich verbessert sich durch den niedrigeren Systemdruck das Rücklaufverhalten des Lenkgetriebes.

Weitere Vorteile und Merkmale der Erfindung ergeben sich aus der folgenden Beschreibung anhand der Figuren. Dabei zeigen:
- Fig. 1: eine schematische Darstellung eines hydraulischen Steuerkreises gemäß einem Ausführungsbeispiel der Erfindung und
- Fig. 2: einen Schnittdarstellung eines Ausführungsbeispiels für ein Ventil.

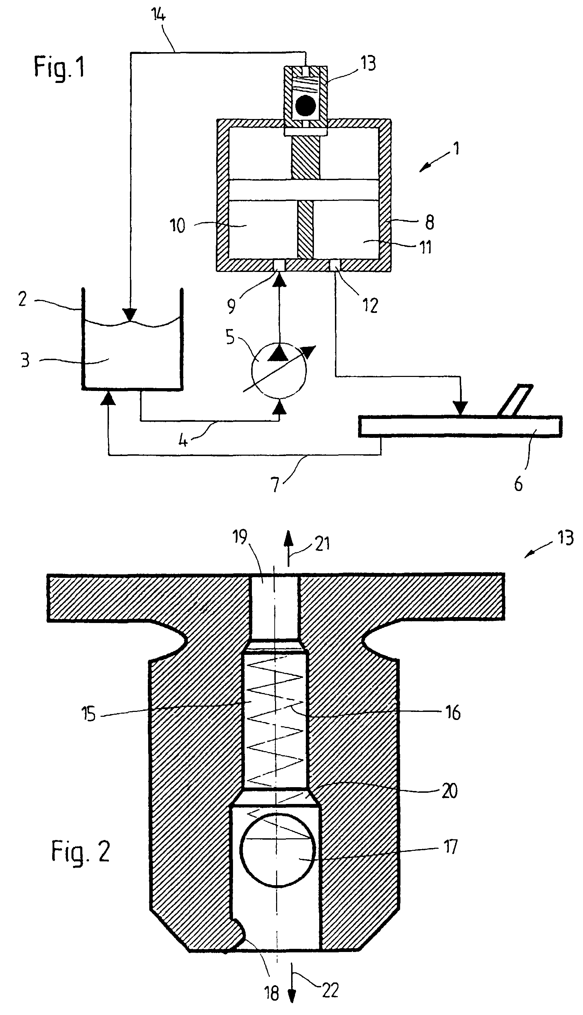

In Figur 1 ist ein Hydrauliksystem 1 gezeigt, bei welchen in einem Tank 2 Hydrauliköl 3 aufgenommen ist. Über eine Leitung 4 wird das Öl 3 einer Pumpe 5 zugeführt, wobei die Ölmenge über ein nicht gezeigtes Ventil einem Lenkgetriebe 6 zugeführt wird. Über eine Leitung 7 gelangt das Öl schließlich wieder zurück in den Tank 2.

Zwischen der Pumpe 5 und dem Lenkgetriebe 6 ist im gezeigten Ausführungsbeispiel ein Resonator 8 angeordnet. In dem Resonator 8 wird das Öl über die Bohrung 9 zugeführt. In dem Resonator 8 sind Kammern 10, 11 ausgebildet, so daß das Öl über die Bohrung 12 den Resonator wieder verläßt. Der Resonator 8 dient dabei der Reduzierung von Druckpulsationen.

Während des Befüllens bzw. nach dem Füllen einer Pumpe mit Resonator, gegebenenfalls auch während des Betriebs infolge von Kavitation, Auslösen von Luft durch chemische Zersetzung, Leckage oder dergleichen, reichert sich in dem Resonatordeckel Luft an. Dies wird begünstigt dadurch, daß der Resonator einen kuppelartigen Deckel aufweist. Die gesammelte Luft wird durch den regulären Ölvolumenstrom nicht vollständig aus dem Resonator gefördert. Die im System verbleibende Luft verschäumt das geforderte Öl. Dies verschlechtert das Geräuschverhalten und kann zum Abreißen des Schmierfilms in der Pumpe führen.

Durch das in der Kuppel des Resonators 8 angeordnete Ventil 13 kann in Abhängigkeit von vorgegebenen Parameter angesammelte Luft über die Leitung 14 in den Tank 2 zurückgeführt werden. Die Betriebsparameter, nach denen das Ventil 13 öffnet bzw. schließt, lassen sich beliebig festlegen. Ein geeigneter Parameter ist der Hydraulikdruck. Das Ventil 13 kann so ausgelegt werden, daß es bei geringen Drücken geöffnet ist. So kann vorgesehen sein, daß das Ventil 13 bei geringen Drücken, beispielsweise p = 2 bar, einen Leckagestrom in den Tank 2 gewährleistet, beispielsweise Q = 0,5 bis 1 Liter/Minute. Bei Drücken > 2 bar ist das Ventil 13 geschlossen und gewährleistet damit den normalen Betrieb von Pumpe 5 und Resonator 8.

Bei modernen und an sich bekannten Pumpen ist der Resonator direkt an der Pumpe befestigt. In diesem Fall führt eine Bohrung von der Pumpe direkt in den Resonator. Das Hydrauliköl durchläuft dann verschiedene Kammern und gelangt über eine weitere Bohrung in den weiteren Kreislauf. Im gezeigten Ausführungsbeispiel ist die Zulaufbohrung in den Resonator 8 die Bohrung 9. Das Hydrauliköl durchläuft einige Kammern 10, 11 und verläßt den Resonator über die Bohrung 12.

In Figur 2 ist ein Ausführungsbeispiel für ein Ventil 13 gezeigt. Das Ventil 13 hat eine Durchgangsbohrung, in welcher in einem Federraum 15 eine Feder 16 angeordnet ist. Die Feder 16 ist im gezeigten Ausführungsbeispiel eine Schraubenfeder, welche eine Kugel 17 gegen einen Rastnocken 18 drückte Somit ist das Ventil 13 zum Nachsaugen geöffnet. Ab einem vorgegebenen Druck wird die Kugel 17 gegen die Kraft der Feder 16 vom Nocken 18 abgedrückt und gegen den Dichtsitz 20 geschlossen. Das Ventil 13 ist von an sich bekannter Bauart. Die Luft, welche mit Öl verschäumt sein kann oder Öl aufweisen kann, verläßt den Resonator über das Ventil 13 und den Anschluß 19 in ein offenes System, beispielsweise den Tank 2.

### Bezugszeichenliste

- 1: Hydrauliksystem
- 2: Tank
- 3: Hydrauliköl
- 4: Leitung
- 5: Pumpe
- 6: Lenkgetriebe
- 7: Leitung
- 8: Resonator
- 9: Bohrung
- 10: Kammer
- 11: Kammer
- 12: Bohrung
- 13: Ventil
- 14: Leitung
- 15: Federraum
- 16: Feder
- 17: Kugel
- 18: Nocken
- 19: Anschluß
- 20: Dichtsitz
- 21: Leckagestrom
- 22: Nachsaugstrom

## Patentansprüche

1. Hydraulik-Servolenksystem mit wenigstens einem Ölentspannungsvolumen in Form eines an einer Hydraulikpumpe angeordneten Resonators, welcher im in Einbaulage oberen Bereich eine Verbindung zu einem Tankvolumen aufweist, die durch ein Ventil hergestellt ist, welches direkt in den Tank ragt, und welches gleichzeitig als Entlüftungs- und als Nachsaugventil eingesetzt ist.

2. Lenksystem nach Anspruch 1, dadurch gekennzeichnet, daß das Ventil druckabhängig schließt.

## Claims

1. Hydraulic power-assisted steering system having at least one oil expansion volume in the form of a resonator, which is disposed adjacent to a hydraulic pump and has in the, in installation position, upper region a connection to a tank volume, which connection is established by a valve, which projects directly into the tank and is used simultaneously as a vent valve and as a suction valve.

2. Steering system according to claim 1, characterized in that the valves closes in a pressure-dependent manner.

## Revendications

1. Système hydraulique de direction assistée caractérisé par au moins un volume de détente de l'huile se présentant sous la forme d'un résonateur disposé sur une pompe hydraulique, résonateur qui présente dans sa zone supérieure en position de montage une liaison avec un volume de réservoir, liaison qui est établie au moyen d'une vanne, qui pénètre directement dans le réservoir, et qui est utilisée en même temps comme vanne de désaération et comme vanne de réaspiration.

2. Système de direction assistée selon la revendication 1, caractérisé en ce que la vanne se ferme en fonction de la pression.
